# FASCICULE DE BREVET EUROPEEN

(11) **EP 3 538 752 B1**
(45) Date de publication et mention de la délivrance du brevet: **10.06.2020**
(21) Numéro de dépôt: 17804248.7
(22) Date de dépôt: 14.11.2017
(51) Int. Cl.: F02C 7/24, B29D 24/00, B29C 45/37, B29C 45/00, G10K 11/172, B29L 31/60, B29K 105/04, B29C 33/00

(54) **PANNEAU D'ATTÉNUATION ACOUSTIQUE COMPRENANT UNE PEAU AVANT ET UNE STRUCTURE CENTRALE**
SCHALLSCHLUCKPLATTE MIT EINER VORDERHAUT UND EINER ZENTRALEN STRUKTUR
ACOUSTIC ATTENUATION PANEL COMPRISING A FRONT SKIN AND A CENTRAL STRUCTURE

(30) Priorité: 14.11.2016 FR 1660978
(43) Date de publication de la demande: 18.09.2019
(73) Titulaire: Safran, 75015 Paris (FR); Safran Nacelles, 76700 Gonfreville-l'Orcher (FR)
(72) Inventeur: VERSAEVEL, Marc, 76700 Gonfreville L'Orcher (FR); GINEFRI, Jean-Philippe, 76700 Gonfreville L'Orcher (FR); PROVOST, Fabrice, 76700 Gonfreville L'Orcher (FR); QUESNEL, Jeremy, 76700 Gonfreville L'Orcher (FR); BALK, Wouter, 77550 Moissy Cramayel (FR); LOUCHARD, Sébastien, 76700 Gonfreville L'Orcher (FR); LE BOULICAUT, Loïc Hervé André, 76700 Gonfreville L'Orcher (FR)
(74) Mandataire: Delorme, Nicolas
(86) Numéro de dépôt international: PCT/FR2017/053110
(87) Numéro de publication internationale: WO 2018/087502

(56) Documents cités:
- EP-B1- 2 291 840
- FR-A1- 2 811 129
- JP-A- H03 248 835
- JP-A- H06 126 853
- US-A- 5 785 919

## Description

La présente invention concerne le domaine technique des panneaux d'atténuation acoustique, destinés notamment à équiper des surfaces internes d'ensembles propulsifs pour des aéronefs, ainsi que les ensembles propulsifs d'aéronef équipés de tels panneaux acoustiques.

Les ensembles propulsifs, comprenant chacun une nacelle et un moteur tel qu'un turboréacteur par exemple double flux, comportent des surfaces internes de guidage aérodynamique des gaz qui peuvent être froids en entrée ou en sortie d'une veine froide, ou chauds en sortie de la combustion.

Pour réduire les bruits émis par le turboréacteur en fonctionnement, un type de panneau acoustique connu, présenté notamment par le document EP-B1-2291840, comporte une peau avant acoustique tournée vers le flux comprenant des micro-perforations, une structure acoustique centrale constituant une âme présentant des cloisons disposées perpendiculairement séparant des cellules formant un nid d'abeille, et une peau arrière.

Par ailleurs, le document US 5785919 divulgue la fabrication de panneau d'atténuation acoustique par un procédé de stéréolithographie.

D'une manière générale, les peaux des panneaux acoustiques sont fixées sur la structure centrale par collage.

La peau avant recevant les ondes sonores présente des passages de gaz formés par les perforations, débouchant dans des cavités résonnantes formées par les cellules fermées de la structure centrale, pour constituer des résonateurs de Helmholtz réalisant une atténuation des émissions acoustiques venant du turboréacteur.

En particulier en choisissant les dimensions des cellules de la structure centrale, notamment la hauteur, on obtient à partir d'une entrée d'ondes sonores par les perforations, une réflexion de ces ondes sur la peau arrière qui les renvoie vers les perforations de la peau avant. On obtient de cette manière une atténuation de l'intensité acoustique pour des gammes de fréquences par effet visco-thermique au niveau des perforations de la peau acoustique.

On cherche en particulier à couvrir au maximum les surfaces aérodynamiques internes recevant des ondes sonores, de panneaux acoustiques pour réduire les émissions sonores des aéronefs.

Toutefois ces panneaux acoustiques comprenant la structure centrale collée sur les deux peaux, fortement rigides, constituent des ensembles relativement lourds et onéreux. De plus ils conviennent pour couvrir des grandes surfaces, mais sont mal adaptés pour couvrir efficacement des petites surfaces.

En effet, la structure centrale en nid d'abeille est généralement chanfreinée en bord de pièce afin de raccorder la peau acoustique et la peau arrière. La zone chanfreinée est moins efficace du point de vue acoustique. Ce type de perte est minime sur des grands panneaux, mais pas sur des petites pièces.

La présente invention a notamment pour but de résoudre ces problèmes présentés par l'art antérieur.

Elle propose à cet effet un panneau d'atténuation acoustique prévu pour un ensemble propulsif, conformément à la revendication 1.

Un avantage de ce panneau d'atténuation acoustique est que la surface de l'élément de l'ensemble propulsif formant la peau arrière du panneau acoustique, on élimine ainsi la peau arrière spécifique qui est généralement prévue à l'arrière des panneaux acoustiques pour fermer les cellules. En d'autre termes, la peau avant et la structure centrale forment le panneau fabriqué d'une seule pièce, le panneau étant fermé à l'avant par ladite peau avant acoustique et ouverte à l'arrière avant d'être positionnée sur l'élément porteur. Avec la peau arrière spécifique en moins, on réduit la masse des panneaux acoustiques, ainsi que les coûts.

De plus la fabrication de ces panneaux acoustiques ne comportant pas de peau arrière, présentant donc les cellules ouvertes vers l'arrière, est plus facile à réaliser, notamment par moulage.

Le panneau d'atténuation acoustique selon l'invention peut comporter une ou plusieurs des caractéristiques suivantes, qui peuvent être combinées entre elles.

Avantageusement, le panneau comporte des moyens de fixation ponctuels sur la surface de l'élément porteur. De cette manière on s'affranchit plus facilement de légères déformations de l'élément porteur ou du panneau acoustique.

Dans ce cas, les moyens de fixation ponctuels peuvent comporter des pattes de fixation disposées parallèlement à la surface de l'élément porteur.

Avantageusement, les moyens de fixation ponctuels sont disposés sur le contour extérieur du panneau acoustique. On peut dans ce cas couvrir une grande surface du panneau avec la peau acoustique.

Avantageusement, le panneau est conformé pour présenter après son montage un jeu entre la base des cloisons et la surface de l'élément porteur. Ce jeu permet d'accepter des petites déformations géométriques de l'élément porteur ou du panneau.

Dans ce cas, le jeu est avantageusement compris entre 0,5 et 1,5mm.

En particulier, les cellules de la structure centrale peuvent présenter dans le plan de la peau avant des contours formant des quadrilatères.

Avantageusement, les cellules fermées de la structure centrale présentent dans le plan de la peau avant, des dimensions inférieures à 60mm.

Avantageusement, le panneau est formé d'une seule pièce par le moulage d'un matériau synthétique. Ce procédé permet de réaliser de manière économique des panneaux avec une surface présentant des formes complexes.

L'invention a aussi pour objet un ensemble propulsif d'aéronef comportant des panneaux d'atténuation acoustique comprenant l'une quelconque des caractéristiques précédentes, conformément à la revendication 10.

D'autres caractéristiques et avantages de l'invention ressortiront à la lecture de la description qui suit, donnée uniquement à titre d'exemple, en référence aux figures annexées suivantes :
- la figure 1 est un schéma d'un turboréacteur présentant en coupe axiale différentes surfaces recevant un traitement acoustique ;
- la figure 2 est un schéma présentant en coupe transversale un panneau d'atténuation acoustique suivant l'invention ;
- les figures 3 et 4 présentent un panneau acoustique suivant l'invention, vu successivement du côté avant et du côté arrière ;
- la figure 5 est une vue de côté de ce panneau acoustique ; et
- la figure 6 est un graphique obtenu par des mesures, présentant en fonction de la fréquence l'atténuation acoustique obtenue avec un panneau selon l'art antérieur et un panneau selon l'invention.

Pour plus de clarté, les éléments identiques ou similaires sont repérés par des signes de référence identiques sur l'ensemble des figures.

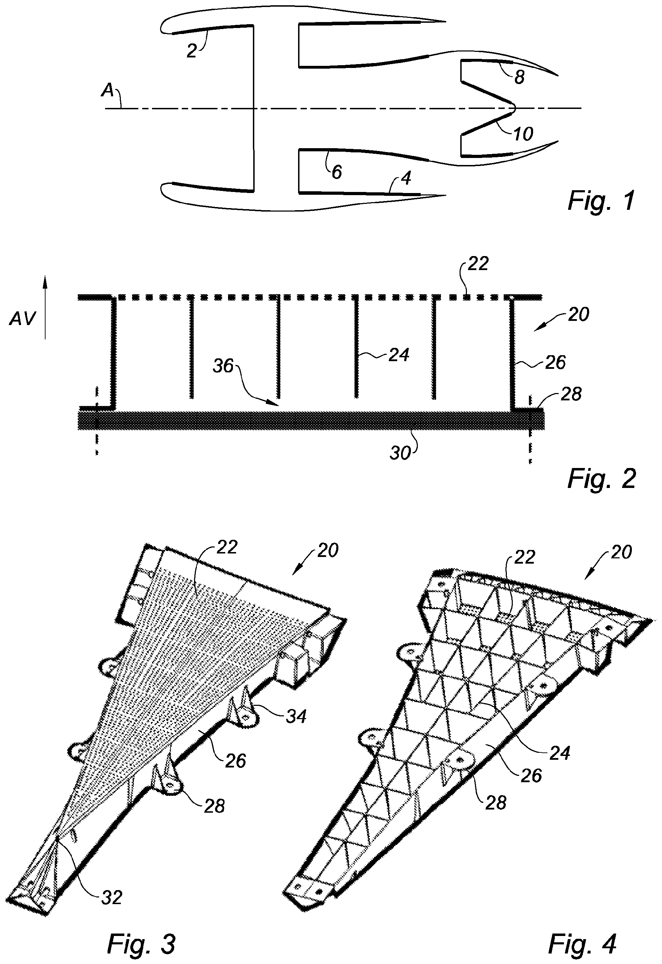

La figure 1 présente un turboréacteur à double flux disposé suivant un axe principal A, recevant sur des surfaces d'éléments porteurs intérieurs des panneaux d'atténuation acoustique, afin d'absorber en partie les ondes sonores reçues sur ces surfaces.

On traite en particulier la surface tournée vers l'axe A du contour de l'entrée d'air froid 2, les surfaces tournées vers l'axe 4 et vers l'extérieur 6 de la veine d'air froid du double flux, et les surfaces tournées vers l'axe 8 et vers l'extérieur du flux d'éjection des gaz chauds.

Les panneaux d'atténuation acoustique sont ainsi prévus pour de tels turboréacteurs, c'est-à-dire pour réduire les bruits émis par cesdits turboréacteurs, notamment au niveau de ces zones formant surfaces de guidage aérodynamique alors léchées par le flux lors de son utilisation. Ces panneaux d'atténuation acoustique sont ainsi destinés à équiper notamment une nacelle entourant la zone du compartiment moteur, comme cela est illustré sur cette figure 1, ladite nacelle portant ces surfaces de guidage aérodynamique.

La figure 2 présente un panneau acoustique 20, comportant sur un côté appelé par convention côté avant, indiqué par la flèche « AV », une peau avant acoustique 22 présentant des perforations. Des cloisons internes 24 sont disposées en dessous de la peau avant 22, perpendiculairement à cette peau. Des supports de fixation 28 sont disposés sur le contour du panneau 20.

Afin de limiter les étapes de fabrication, et donc le coût de la pièce, l'ensemble du panneau 20 est réalisé en une seule fois, par exemple par injection de matière thermoplastique dans un moule formant le négatif de la pièce. On obtient alors un panneau d'atténuation acoustique comportant seulement une peau avant acoustique 22 et des cloisons internes 24 délimitant des cellules fermées globalement (exception faite des perforations) à l'avant par ladite peau avant acoustique 22 et ouvertes à l'arrière, c'est-à-dire du côté opposé à la peau avant acoustique 22.

Les pattes 28 viennent au contact de la surface de l'élément porteur 30 pour être fixées dessus, les cloisons 24 étant légèrement décalées de cette surface, avec un jeu minimum 36 de l'ordre de 1mm. Ce jeu est ainsi réalisé par ce léger décalage des pattes 28 de fixation par rapport aux cloisons 24.

Le jeu 36 permet de s'assurer qu'avec des petites déformations par rapport à une courbure théorique, du panneau acoustique 20 complet et de l'ensemble de la surface de l'élément porteur 30, on obtient quand même un appui franc sur des points limités formés par les pattes de fixation 28 assurant un bon serrage sur cet élément, et un bon positionnement de la surface aérodynamique de la peau avant 22 dans la veine de la nacelle, sans être gêné par les cloisons 24 de la structure interne qui pourraient appuyer sur cette surface si aucun jeu n'était prévu.

Avantageusement les pattes de fixation 28 sont disposées en dehors de la surface de guidage aérodynamique, de manière à couvrir cette surface d'un maximum de peau avant acoustique 22 pour optimiser l'atténuation sonore.

Les figures 3, 4 et 5 présentent un panneau acoustique 20 formé d'une seule pièce par le moulage d'un matériau thermoplastique, comportant une forme globalement triangulaire présentant une pointe 32.

On peut en particulier utiliser tout type de matériau thermoplastique, mais aussi des matériaux thermodurcissables formés par moulage. On peut aussi prévoir une fabrication du panneau 20 avec un procédé de prototypage rapide, comprenant une impression en trois dimensions permettant de former la pièce sans moule.

Le dessus du panneau acoustique 20 comporte la peau avant acoustique 22. Le dessous de cette peau avant 22 comporte une structure centrale composée de cloisons 24 disposées perpendiculairement, formant un quadrillage présentant des quadrilatères sensiblement carrés, qui couvrent l'ensemble de la surface perforée de cette peau.

Le panneau acoustique 20 comporte un contour extérieur 26 présentant sur les côtés et sur la pointe avant 32 des pattes 28 formées aussi par le moulage du matériau. Certaines pattes 28 sont reliées au contour extérieur 26 par des triangles de renforcement 34 leur assurant une rigidité importante.

Le moulage du panneau acoustique 20 est facilité par l'ouverture complète des cellules vers l'arrière, qui permet notamment de former un moule comprenant deux parties se raccordant suivant un plan de joint parallèle à ce panneau, formant pour l'une le côté extérieur de la peau avant 22, et pour l'autre le côté intérieur ainsi que l'ensemble des cloisons 24.

Lors du moulage du panneau acoustique 20, on prévoit le jeu minimum 36 sur l'ensemble des cloisons 24 et du contour extérieur 26, par rapport à la base des pattes 28, pour faciliter le montage sur la surface de l'élément porteur 30. De cette manière on limite les contraintes de précision sur la forme globale du panneau acoustique 20 lors de son moulage, ce qui facilite sa fabrication et réduit les coûts.

On notera que par ce principe de moulage on peut réaliser facilement des pièces présentant des petites dimensions et des masses faibles, comparé aux panneaux classiques utilisant une structure en nid d'abeille recevant une peau collée sur ses deux faces.

De plus le jeu 36 formé à l'arrière de l'ensemble des cellules fermées de la structure centrale, permet une évacuation de liquides rentrant dans le panneau acoustique 20 par les perforations de la peau avant 22, notamment de l'eau, ou éventuellement du carburant en cas de défaillance. En prévoyant un circuit d'évacuation des liquides comprenant les jeux 36, on évite une accumulation qui pourrait dans le cas de l'eau former de la glace remplissant les cellules fermées et réduisant l'efficacité de l'atténuation acoustique, ou de carburant qui pourrait alors s'enflammer.

Pour obtenir un bon niveau d'atténuation acoustique, les perforations de la peau avant 22 représentent de préférence entre 5 et 15% de la surface active de cette peau, et avantageusement environ 10%. De plus pour un bon niveau d'atténuation jusqu'à la fréquence de 3000Hz, la section des cellules dans le plan de peau avant 22 est avantageusement inscrite dans un carré présentant un côté de 50mm.

Les perforations de la peau avant 22 sont avantageusement directement réalisées lors du moulage du panneau acoustique 20, ce qui permet d'éviter la phase de perçage indispensable pour les structures composites conventionnelles incluant un nid d'abeille.

La répartition des perforations et le pas entre ces perforations peuvent être évolutifs en fonction de la forme de la pièce, pour obtenir la meilleure répartition sans avoir de perte entre les cellules fermées.

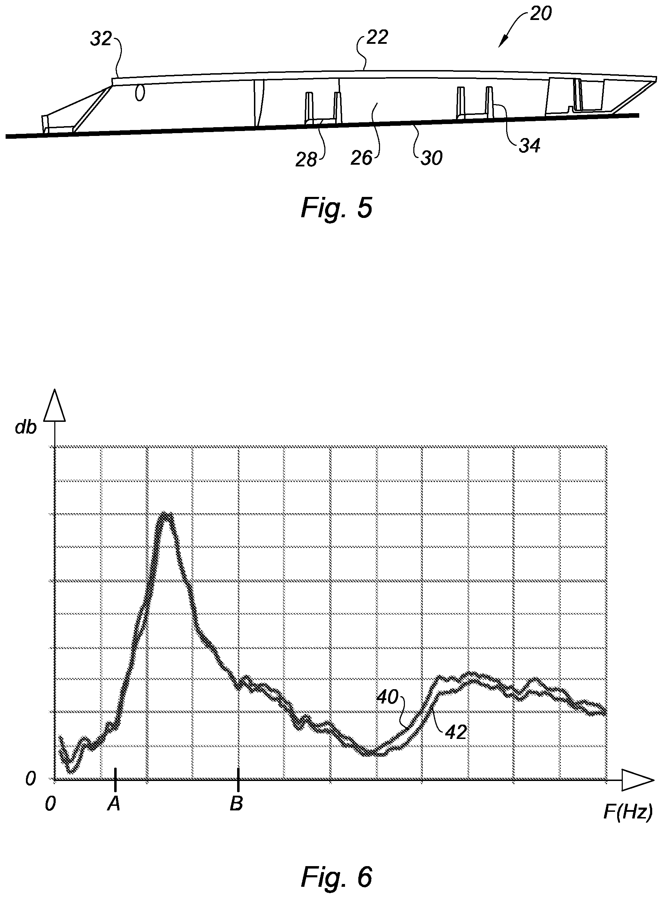

La figure 6 présente en fonction de la fréquence F d'une onde sonore exprimée en Hertz, une première courbe 40 d'atténuation acoustique exprimée en décibels, obtenue par des mesures sur un panneau acoustique selon l'art antérieur, comportant les cloisons 24 des cellules fermées qui rejoignent complètement une peau arrière de ce panneau, sans jeu interposé.

Une deuxième courbe 42 présente l'atténuation acoustique obtenue par des mesures sur un panneau acoustique 20 selon l'invention, comportant les cloisons des cellules fermées 24 présentant un jeu de 1mm par rapport à la surface d'un élément porteur 30 recevant ce panneau.

La théorie sur les résonateurs de Helmholtz nécessite des cellules en principe entièrement fermées, comportant des cloisons 24 rejoignant la peau arrière du panneau acoustique.

On constate de manière inattendue que les performances d'atténuation acoustique du panneau selon l'invention, sont quasiment équivalentes pour une fréquence comprise entre 700 (A) et 2000Hz (B), et légèrement inférieures de moins de 1dB en dessous de la valeur A, et au-dessus de la valeur B.

Les performances acoustiques du panneau selon l'invention sont réduites de manière marginale, avec des panneaux très économiques à fabriquer, et qui peuvent s'adapter facilement sur des petites surfaces présentant des formes complexes, ce qui permet d'augmenter la surface couverte est globalement d'améliorer l'atténuation acoustique d'un moteur tel qu'un turboréacteur.

L'invention est décrite dans ce qui précède à titre d'exemple. Il est entendu que l'homme du métier est à même de réaliser différentes variantes de réalisation de l'invention sans pour autant sortir du cadre de l'invention qui est défini par l'objet des revendications 1 à 10.

## Revendications

1. Panneau d'atténuation acoustique prévu pour un ensemble propulsif, comportant une peau avant acoustique (22) comprenant des perforations, puis une structure centrale formée de cloisons (24) disposées perpendiculairement pour constituer des cellules, **caractérisé en ce que** la peau avant (22) et la structure centrale forment le panneau (20) fabriqué d'une seule pièce, les cellules étant ouvertes vers l'arrière, le panneau d'atténuation acoustique étant prévu pour couvrir directement une surface d'un élément porteur (30) de l'ensemble propulsif formant une peau arrière fermant vers l'arrière les cellules de la structure centrale.

2. Panneau d'atténuation selon la revendication 1, **caractérisé en ce qu'**il comporte des moyens de fixation ponctuels (28) sur la surface de l'élément porteur (30).

3. Panneau d'atténuation selon la revendication 2, **caractérisé en ce que** les moyens de fixation ponctuels (28) comportent des pattes de fixation disposées parallèlement à la surface de l'élément porteur (30).

4. Panneau d'atténuation selon la revendication 2 ou 3, **caractérisé en ce que** les moyens de fixation ponctuels (28) sont disposés sur son contour extérieur (26).

5. Panneau d'atténuation selon l'une quelconque des revendications précédentes, **caractérisé en ce qu'**il est conformé pour présenter après son montage un jeu (36) entre la base des cloisons (24) et la surface de l'élément porteur (30).

6. Panneau d'atténuation selon la revendication 5, **caractérisé en ce que** le jeu (36) est compris entre 0,5 et 1,5mm.

7. Panneau d'atténuation selon l'une quelconque des revendications précédentes, **caractérisé en ce que** les cellules de la structure centrale présentent dans le plan de la peau avant (22), des contours formant des quadrilatères.

8. Panneau d'atténuation selon l'une quelconque des revendications précédentes, **caractérisée en ce que** les cellules fermées de la structure centrale présentent dans le plan de la peau avant (22), des dimensions inférieures à 60mm.

9. Panneau d'atténuation selon l'une quelconque des revendications précédentes, **caractérisé en ce qu'**il est formé d'une seule pièce par le moulage d'un matériau synthétique.

10. Ensemble propulsif d'aéronef **caractérisé en ce qu'**il comporte des panneaux d'atténuation acoustique selon l'une quelconque des revendications précédentes.

## Patentansprüche

1. Schallschluckplatte, die für eine Vortriebseinheit vorgesehen ist, eine vordere Schallhaut (22) beinhaltend, die Perforationen umfasst, danach eine zentrale Struktur, die durch Trennwände (24) gebildet wird, die senkrecht angeordnet sind, um Zellen darzustellen, **dadurch gekennzeichnet, dass** die vordere Haut (22) und die zentrale Struktur die Platte (20) bilden, die aus einem einzigen Stück hergestellt ist, wobei die Zellen nach hinten offen sind, wobei die Schallschluckplatte vorgesehen ist, um direkt eine Oberfläche eines Trägerelements (30) der Vortriebseinheit abzudecken, die eine hintere Haut bildet, die die Zellen der zentralen Struktur nach hinten schließt.

2. Schluckplatte nach Anspruch 1, **dadurch gekennzeichnet, dass** sie punktuelle Befestigungsmittel (28) auf der Oberfläche des Trägerelements (30) beinhaltet.

3. Schluckplatte nach Anspruch 2, **dadurch gekennzeichnet, dass** die punktuellen Befestigungsmittel (28) Befestigungslaschen beinhalten, die parallel zur Oberfläche des Trägerelements (30) angeordnet sind.

4. Schluckplatte nach Anspruch 2 oder 3, **dadurch gekennzeichnet, dass** die punktuellen Befestigungsmittel (28) an ihrer äußeren Kontur (26) angeordnet sind.

5. Schluckplatte nach einem der vorstehenden Ansprüche, **dadurch gekennzeichnet, dass** sie ausgeformt ist, um nach der Montage ein Spiel (36) zwischen der Basis der Trennwände (24) und der Oberfläche des Trägerelements (30) aufzuweisen.

6. Schluckplatte nach Anspruch 5, **dadurch gekennzeichnet, dass** das Spiel (36) zwischen 0,5 und 1,5 mm enthalten ist.

7. Schluckplatte nach einem der vorstehenden Ansprüche, **dadurch gekennzeichnet, dass** die Zellen der zentralen Struktur auf der Ebene der vorderen Haut (22) Konturen aufweisen, die Vierecke bilden.

8. Schluckplatte nach einem der vorstehenden Ansprüche, **dadurch gekennzeichnet, dass** die geschlossenen Zellen der zentralen Struktur auf der Ebene der vorderen Haut (22) Abmessungen aufweisen, die kleiner als 60 mm sind.

9. Schluckplatte nach einem der vorstehenden Ansprüche, **dadurch gekennzeichnet, dass** sie aus einem einzigen Stück durch Formen eines synthetischen Materials gebildet ist.

10. Vortriebseinheit eines Luftfahrzugs, **dadurch gekennzeichnet, dass** sie Schallschluckplatten nach einem der vorstehenden Ansprüche beinhaltet.

## Claims

1. An acoustic attenuation panel provided for a propulsion unit, including an acoustic front skin (22) comprising perforations, then a central structure formed by partition walls (24) disposed perpendicularly to constitute cells, **characterized in that** the front skin (22) and the central structure form the panel (20) manufactured integrally in one-piece, the cells being open at the rear, the acoustic attenuation panel being provided to directly cover a surface of a carrier element (30) of the propulsion unit forming a rear skin closing at the rear the cells of the central structure.

2. The attenuation panel according to claim 1, **characterized in that** it includes punctual fastening means (28) over the surface of the carrier element (30).

3. The attenuation panel according to claim 2, **characterized in that** the punctual fastening means (28) include fastening feet disposed parallel to the surface of the carrier element (30).

4. The attenuation panel according to claim 2 or 3, **characterized in that** the punctual fastening means (28) are disposed over its external contour (26).

5. The attenuation panel according to any one of the preceding claims, **characterized in that** it is shaped so as to have, after the mounting thereof, a clearance (36) between the base of the partition walls (24) and the surface of the carrier element (30).

6. The attenuation panel according to claim 5, **characterized in that** the clearance (36) is comprised between 0.5 and 1.5 mm.

7. The attenuation panel according to any one of the preceding claims, **characterized in that** the cells of the central structure have, in the plane of the front skin (22), contours forming quadrilaterals.

8. The attenuation panel according to any one of the preceding claims, **characterized in that** the closed cells of the central structure have, in the plane of the front skin (22), dimensions smaller than 60 mm.

9. The attenuation panel according to any one of the preceding claims, **characterized in that** it is formed integrally in one-piece by molding of a synthetic material.

10. An aircraft propulsion unit **characterized in that** it includes acoustic attenuation panels according to any one of the preceding claims.
